# EUROPÄISCHE PATENTSCHRIFT

(11) **EP 2 599 667 B1**
(45) Veröffentlichungstag und Bekanntmachung des Hinweises auf die Patenterteilung: **27.05.2015**
(21) Anmeldenummer: 12194452.4
(22) Anmeldetag: 27.11.2012
(51) Int. Cl.: B60R 1/062, B60R 1/066, B60R 1/072

(54) **Spiegelkomponente für eine Kraftfahrzeug-Spiegelanordnung, Spiegelanordnung mit einer solchen Spiegelkomponente sowie Tragstruktur und Verstelleinheit für eine solche Spiegelkomponente oder eine solche Spiegelanordnung**
Mirror components for a motor vehicle mirror assembly, mirror assembly with such a mirror component and support structure and adjustment unit for such a mirror component or such a mirror assembly
Composant de rétroviseur pour un agencement de rétroviseur de véhicule automobile, agencement de rétroviseur équipé d'un tel composant de rétroviseur ainsi qu'unité de réglage et la structure porteuse d'un tel composant de rétroviseur ou d'un tel agencement de rétroviseur

(30) Priorität: 01.12.2011 DE 102011087572
(43) Veröffentlichungstag der Anmeldung: 05.06.2013
(73) Patentinhaber: MEKRA Lang GmbH & Co. KG, 91465 Ergersheim (DE)
(72) Erfinder: Heger, Sebastian, 91438 Bad Windsheim (DE); Rebelein, Christian, 91580 Petersaurach (DE); Lang, Werner, Dr., 91465 Ergersheim (DE); Popp, Albrecht, 91629 Weihenzell (DE)
(74) Vertreter: Winter, Brandl, Fürniss, Hübner, Röss, Kaiser, Polte - Partnerschaft mbB

(56) Entgegenhaltungen:
- DE-A1- 10 330 488
- DE-U1- 20 117 559
- US-A1- 2010 224 753

## Beschreibung

Spiegelkomponente für eine Kraftfahrzeug-Spiegelanordnung, Spiegelanordnung mit einer solchen Spiegelkomponente sowie Tragstruktur Verstelleinheit für eine solche Spiegelkomponente oder eine solche Spiegelanordnung

Die Erfindung betrifft eine Spiegelkomponente für eine Kraftfahrzeug-Spiegelanordnung nach dem Oberbegriff des Anspruchs 1 sowie eine Spiegelanordnung mit einer solchen Spiegelkomponente nach Anspruch 15, eine Tragstruktur für eine Spiegelkomponente oder Spiegelanordnung nach Anspruch 17 und eine Verstelleinheit für eine Spiegelkomponente oder eine Spiegelanordnung nach Anspruch 18.

Spiegelanordnungen für Kraftfahrzeuge weisen heute üblicherweise eine elektromotorische Verstelleinheit auf, mit der die Neigung der Spiegelfläche und damit das Sichtfeld innerhalb bestimmter Grenzen durch den Fahrer eingestellt werden kann. Eine derartige Spiegelanordnung ist beispielsweise aus der DE 10 2008 053 177 A1 bekannt. Diese bekannte Spiegelanordnung umfasst eine Tragstruktur, an der eine Verstelleinheit angeschraubt ist. Auf der Verstelleinheit ist eine flächige Tragplatte montiert. Über diese flächige Tragplatte ist an der Verstelleinheit eine Spiegeltragplatte mit einer Spiegelscheibe verbunden. Die Verbindung der flächigen Tragplatte an der Verstelleinheit mit der flächigen Spiegeltragplatte erfolgt üblicherweise durch eine sogenannte Klemmschiebeverbindung, wie sie aus der EP 0 609 508 B1 bekannt ist. Derartige Klemmschiebeverbindungen eignen sich zur Verbindung von zwei flächigen Strukturen und Komponenten.

Nachteilig bei der Spiegelanordnung nach der DE 10 2008 053 177 A1 ist es, dass die Verschraubung der Verstelleinheit mit der Tragstruktur nicht ohne Weiteres optisch überprüft werden kann. Allein durch optische Inspektion der eventuell sichtbaren Schraubköpfe der Verschraubung kann nicht ohne Weiteres auf die Qualität der Verschraubung bzw. Verbindung rückgeschlossen werden.

Die US 2010 / 0224753 A1 beschreibt eine Befestigungsstruktur für einen Fahrzeugaußenspiegel. Dabei wird eine Verstelleinheit mittels eines daran vorgesehenen Vorsprungs durch eine Drehbewegung an einem Vorsprung eines Trägerelements verklemmt.

In der DE 103 30 488 A1 ist eine Spiegelvorrichtung für ein Fahrzeug beschrieben, bei der ein Spiegelflächenwinkeleinstellmechanismus unter anderem mittels Eingriffsklauen, die sich mit Eingriffsgliedern im Eingriff befinden, an einem Türspiegelschirm befestigt ist.

Aus der DE 201 17 559 U1 ist eine motorbetriebene Verstellvorrichtung für einen Fahrzeugspiegel bekannt, deren Gehäuse über wenigstens ein Rastelement verfügt, mit dem es an einem Spiegelkopfträger eingerastet wird. Das Rastelement ist als Rasthaken ausgeführt, der in eine Rastnase des Spiegelkopfträgers einrastet

Es ist daher Aufgabe der vorliegenden Erfindung eine Spiegelkomponente bestehend aus Tragstruktur und daran montierter Verstelleinheit anzugeben, bei der der

Montageprozess deutlich vereinfacht wird. Weiter ist es Aufgabe der vorliegenden Erfindung eine Spiegelanordnung mit einer solchen Spiegelkomponente sowie eine besonders geeignete Tragstruktur und Verstelleinheit hierfür anzugeben.

Die Lösung dieser Aufgaben erfolgt durch die Merkmale der Ansprüche 1, 15, 17 und 18.

Eine Klemmverbindung kann so gestaltet werden, dass optisch überprüft werden kann, ob die einander zugeordneten Klemmelemente in der richtigen Position zueinander angeordnet sind bzw. ob die sie ineinander eingreifen. Zudem wird der Montageprozess vereinfacht. Durch die vorteilhafte Ausgestaltung der Erfindung werden ein erster und ein zweiter Satz von Klemmklauen bereitgestellt und die zugehörigen Klemmlaschen an der Verstelleinheit werden entweder in die Klemmklauen des ersten Satzes von Klemmklauen oder in die Klemmklauen des zweiten Satzes von Klemmklauen eingeführt. Durch die räumliche Anordnung der beiden Sätze von Klemmklauen lassen sich somit unterschiedliche Montagepositionen der Verstelleinheit an der Tragestruktur festlegen. Alternativ können natürlich anstelle von zwei Sätzen von Klemmklauen auch zwei Sätze von Klemmlaschen und nur ein Satz von Klemmklauen vorhanden sein. Durch diese Ausführungsform ist es möglich, mit einer spiegelsymmetrischen Tragstruktur und nur einer Art von Verstelleinheit eine Spiegelkomponente für einen linken und auch für einen rechten Außenspiegel bereitzustellen.

Durch die vorteilhafte Ausgestaltung der Erfindung nach Anspruch 2 kann die Klemmwirkung zum einen durch das Einklemmen der Klemmlaschen zwischen den einander gegenüber liegenden Klemmklauen erfolgen. Zusätzlich oder alternativ kann die Klemmwirkung auch unmittelbar durch das Einklemmen der Klemmlaschen zwischen den Klemmklauen erfolgen.

Durch die vorteilhafte Ausgestaltung der Erfindung nach Anspruch 3 wird eine Klemmebene festgelegt und das Verkippen von Verstelleinheit und Tragstruktur gegeneinander sicher verhindert.

Durch die vorteilhafte Ausgestaltung nach Anspruch 4 werden die Vorsprünge der Klemmlaschen sicher in den Aufnahmekanälen der Klemmklauen geführt und form- und reibschlüssig gehalten.

Durch die vorteilhafte Ausgestaltung der Erfindung nach Anspruch 6 wird der nichtflächigen Struktur der Verstelleinheit Rechnung getragen.

Die vorteilhafte Ausgestaltung der Erfindung nach Anspruch 7 erlaubt zum einen eine sehr leichte und stabile Tragstruktur und zusätzlich kann die Verstelleinheit zumindest zum Teil in den Durchbruch in der Tragstruktur eintauchen. Hierdurch ergibt sich eine niedrigere Bauhöhe der erfindungsgemäßen Spiegelkomponente.

Das form- und reibschlüssige Einbringen der Klemmlaschen in die Klemmklauen kann entweder durch eine Drehung oder durch eine lineare Schubbewegung oder auch durch eine Kombination von beiden erfolgen - Anspruch 8.

Gemäß der vorteilhaften Ausgestaltung der Erfindung nach Anspruch 9 liegen sowohl die Klemmlaschen als auch die Klemmklauen in einer Ebene bzw. spannen eine Klemmebene auf. Hierdurch wird das form- und reibflüssige Ineinanderbringen von Klemmlaschen und Klemmklauen erleichtert.

Durch die vorteilhafte Ausgestaltung der Erfindung nach Anspruch 10 ist die Klemmebene eine Schnittebene durch die Verstelleinheit d.h. die Verstelleinheit taucht in die Klemmebene ein wodurch ebenfalls eine niedrigere Bauhöhe der erfindungsgemäßen Spiegelkomponente ermöglicht wird.

Durch die vorteilhafte Ausgestaltung der Erfindung nach Anspruch 11 wird das Einführen der Klemmlaschen in die Klemmklauen erleichtert.

Durch die vorteilhafte Ausgestaltung der Erfindung nach Ansprüchen 12 bis 14 erfolgt eine Sicherung der Klemmverbindung, z.B. mittels einer Schraubverbindung.

Anspruch 15 bezieht sich auf eine Spiegelanordnung mit einer erfindungsgemäßen Spiegelkomponente.

Die Ausgestaltung nach Anspruch 16 bezieht sich auf bevorzugte Speigel- bzw. Spiegelkopfdimensionen.

Anspruch 17 bezieht sich auf eine Tragstruktur und Anspruch 18 auf eine Verstelleinheit, die jeweils besonders geeignet für die Spiegelkomponente oder die Spiegelanordnung gemäß der vorliegenden Erfindung sind. Die vorstehend erläuterten bevorzugten Ausgestaltungen der Spiegelkomponente beziehen sich entweder auf die Verstelleinheit oder auf die Tragstruktur. Die jeweiligen Ausgestaltungen von Verstelleinheit und Tragstruktur sind auch als Weiterbildung der nebengeordneten Ansprüche 17 und 18 aufzufassen.

Weitere Einzelheiten, Merkmale und Vorteile der Erfindung ergeben sich aus der nachfolgenden Beschreibung einer bevorzugten Ausführungsform anhand der Zeichnungen. Es zeigt:
Fig. 1 eine perspektivische Darstellung einer Spiegelkomponente mit Verstelleinheit und Tragstruktur gemäß der vorliegenden Erfindung,
Fig. 2 eine perspektivische Darstellung der Tragstruktur der Spiegelkomponente nach Fig. 1,
Fig. 3 eine perspektivische Darstellung der Verstelleinheit der Spiegelkomponente nach Fig. 1,
Fig. 4 eine Aufsicht auf die Spiegelkomponente gemäß Fig. 1, wobei die Verstelleinheit in einer ersten Montageposition montiert ist,
Fig. 5 eine Schnittdarstellung entlang A-A in Fig. 4,
Fig. 6 eine Schnittdarstellung entlang B-B in Fig. 4,
Fig. 7 eine Aufsicht auf die Spiegelkomponente nach Fig. 1, wobei die Verstelleinheit in einer zweiten Montageposition montiert ist,
Fig. 8 eine Schnittdarstellung entlang C-C in Fig. 7,
Fig. 9a, 9b und 9c verschiedene Montageschritte der Verstelleinheit an der Tragstruktur., und
Fig. 10 eine Schnittdarstellung durch eine Spiegelanordnung gemäß der vorliegenden Erfindung.

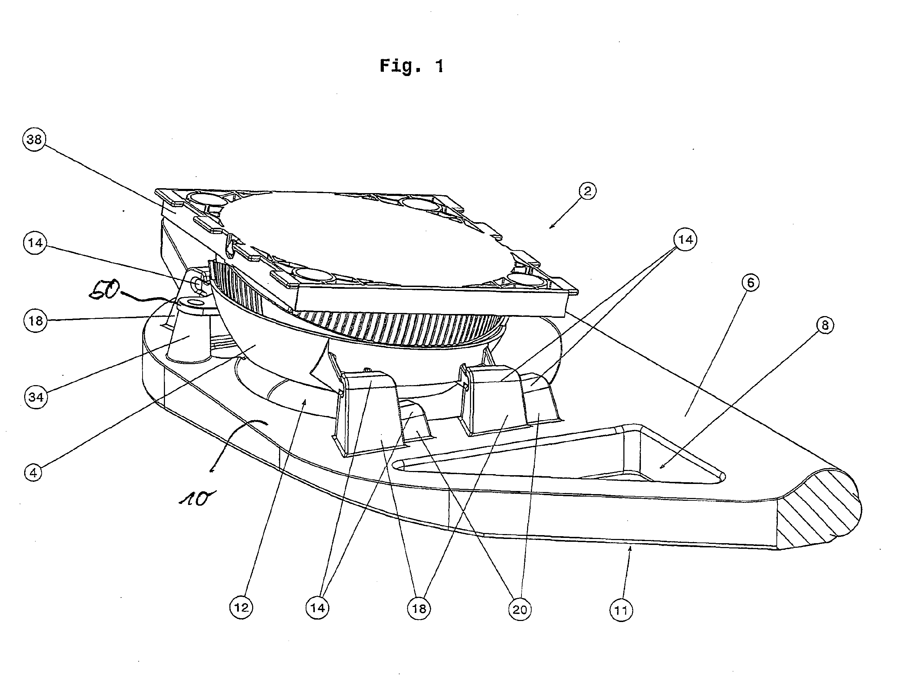

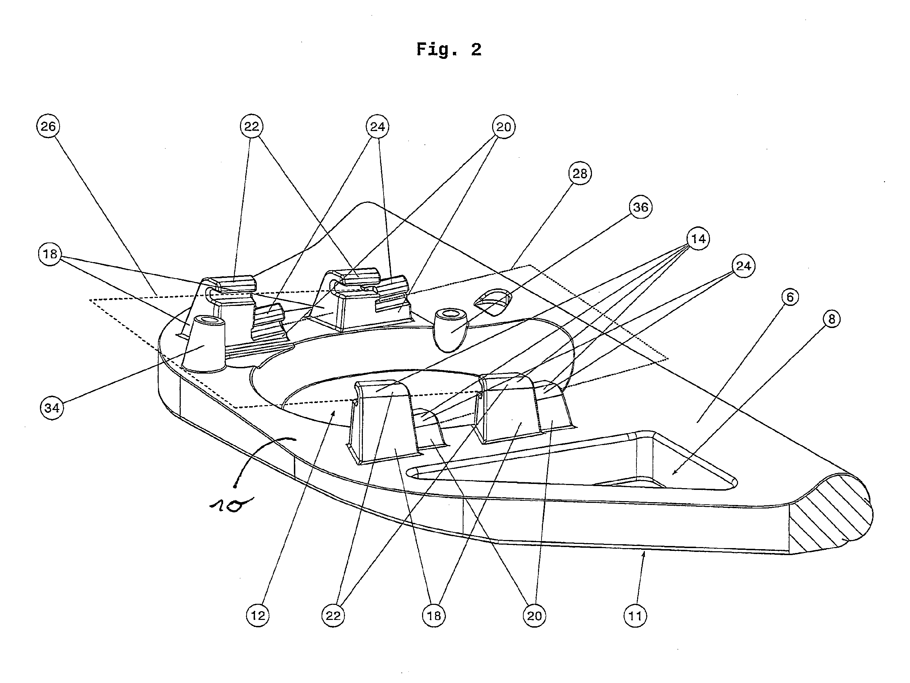

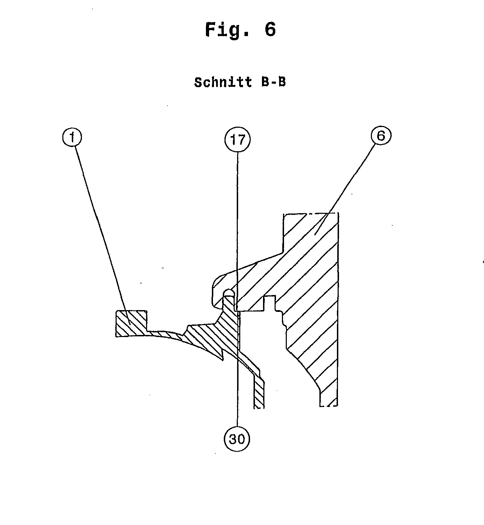

Fig. 1 zeigt eine perspektivische Darstellung einer beispielhaften Ausgestaltung einer Spiegelkomponente 2 gemäß der vorliegenden Erfindung, wobei eine Verstelleinheit 4 mittels einer Klemmverbindung an einer Tragstruktur 6 montiert ist. Die in Fig. 2 dargestellte Tragstruktur 6 ist eine Fachwerkstruktur mit einer Mehrzahl von Durchbrüchen, im Beispielsfall einem ersten und einem zweiten Durchbrüchen 4 und 5. Die Tragstruktur 6 ist zumindest in dem Bereich in dem die Verstelleinheit 4 montiert ist D-förmig ausgebildet und weist eine Vorderseite 10 und eine Rückseite 11 auf. Unter der Verstelleinheit 4 weist die Tragstruktur 6 eine Vertiefung 12 auf. Auf der Vorderseite 10 der Tragstruktur 6 sind acht Klemmklauen 14 um die Vertiefung 12 herum angeordnet. Die Klemmklauen 14 besitzen einen im Querschnitt - siehe Fig. 6 - U-förmigen Klemmkanal 16 mit oberen und unteren Randflächen 15 und 17. Vier der Klemmklauen 14 sind über einen großen Fuß 18 und vier Klemmklauen 14 sind über einen kleinen Fuß 20 mit der Vorderseite 10 verbunden. Die vier Klemmklauen 14 mit dem großen Fuß 18 bilden einen ersten Satz 22 von Klemmlauen 14 und die vier Klemmklauen 14 mit dem kleinen Fuß 20 bilden einen zweiten Satz 24 von Klemmklauen 14. Die Klemmkanäle 16 des ersten Satzes von Klemmklauen 14 liegen in einer Ebene und spannen eine erste Klemmebene 26 auf. Die Klemmkanäle 16 des zweiten Satzes von Klemmklauen 14 liegen ebenfalls in einer Ebene und spannen eine zweite Klemmebene 28 auf, die sich von der ersten Klemmebene 26 unterscheidet. Die erste Satz 22 von Klemmklauen 14 legt eine erste Montageposition 30 und der zweite Satz 24 von Klemmklauen 14 legt eine zweite Montageposition für die Verstelleinheit 4 an der Tragstruktur 6 fest. Die Klemmklauen 14 im ersten und zweiten Satz 22, 24 sind mit dem Vertiefung 12 dazwischen paarweise einander zugeordnet. Zusätzlich sind am Rand der Vertiefung 12 noch zwei Schraubzapfen 34 und 36 angeordnet, die ein erstes Sicherungselement für die Klemmverbindung darstellen.

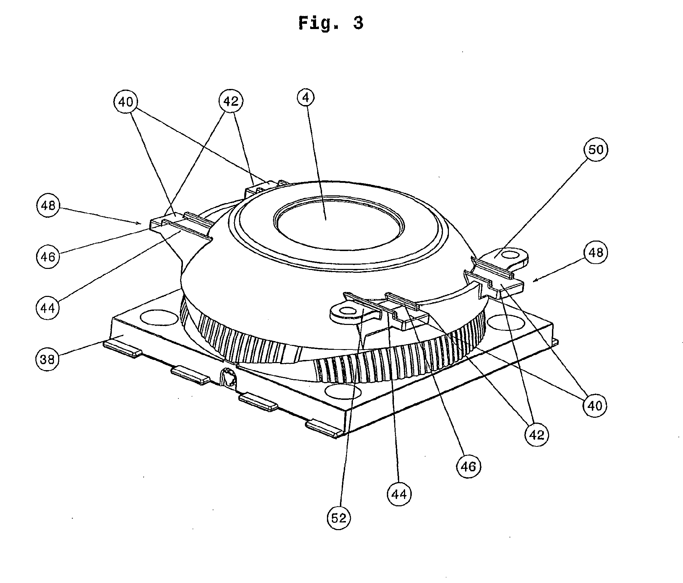

Fig. 3 zeigt die becherförmige Verstelleinheit 4 mit einer Tragplatte 38 für eine nicht dargestellte Spiegeltragplatte mit Spiegelscheibe. Die Klemmlaschen 40 weisen freie Enden 42 auf, die mit den Klemmkanälen 16 in Eingriff bringbar sind. Von den freien Enden 42 der Klemmlaschen 40 nach innen in Richtung Verstelleinheit 4 versetzt sind jeweils zwei Führungskanten 44 und 46 vorgesehen, die eine Führungsfläche 48 aufspannen. Die Führungskanten 44 und 46 kontaktieren die untere Randfläche 17. An zweien der Klemmlaschen 40 ist eine erste 50 bzw. zweite Schrauböse 52 angeordnet, die ein zweites Sicherungselement für den ersten Satz 22 von Klemmklauen 14 bzw. für den zweiten Satz 24 von Zapfen 14 darstellen.

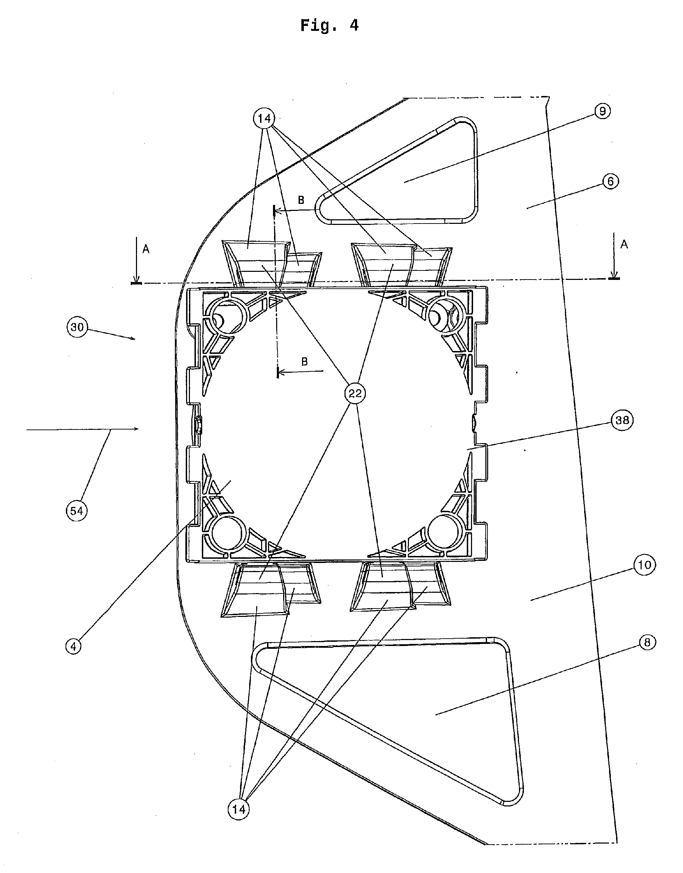

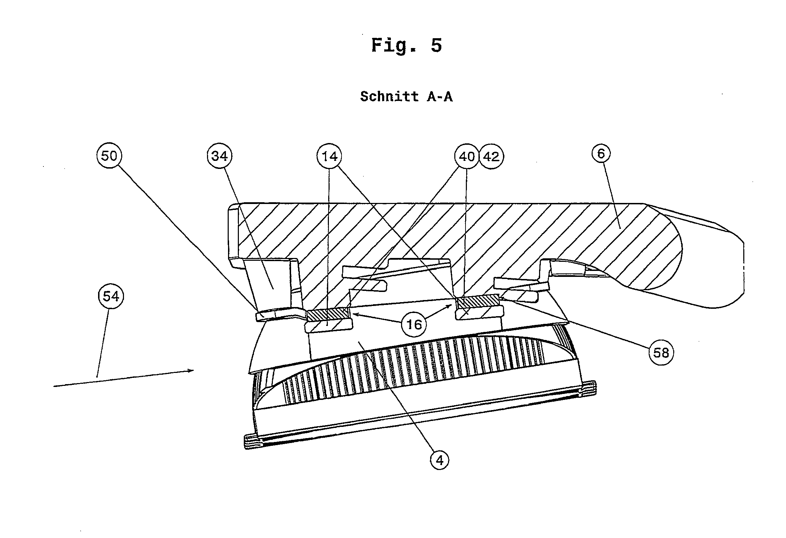

Figuren 1, 4, 5 und 6 zeigen die Spiegelkomponente 2, wobei die Verstelleinheit 4 in der ersten Montageposition 30 an der Tragstruktur 6 montiert ist. Bei der ersten Montageposition 30 erfolgt der Einschub der Verstelleinheit 4 bzw. der freien Enden 42 der Klemmlaschen 40 in die Klemmkanäle 16 der Klemmklauen 14 aus Richtung des Pfeils 54. In der ersten Montageposition 30 fluchtet die Schrauböse 50 mit dem ersten Schraubzapfen 34. Durch eine nicht dargestellte Schraube als drittes Sicherungselement können die erste Schrauböse 50 und der erste Schraubzapfen 34 miteinander verschraubt werden.

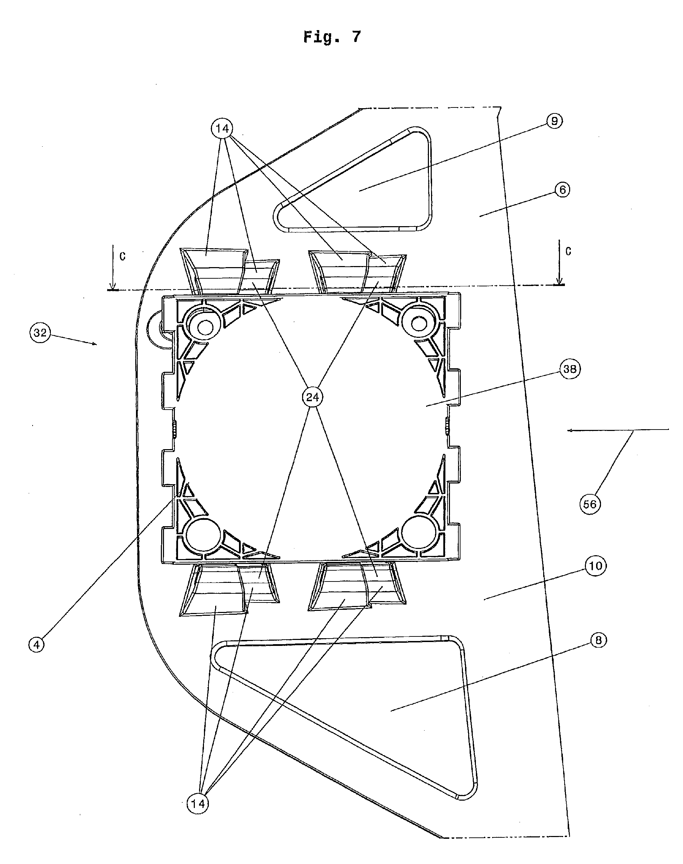

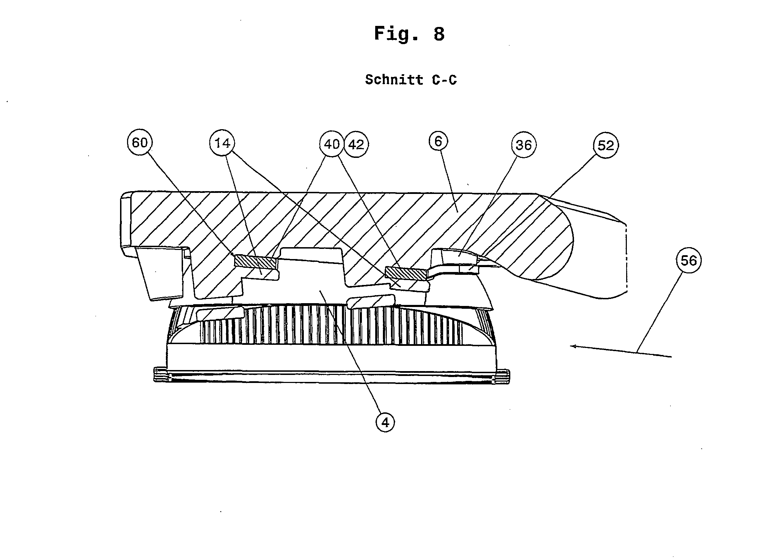

Fig. 7 und 8 zeigen die Spiegelkomponente 2 gemäß der vorliegenden Erfindung, wobei die Verstelleinheit 4 in der zweiten Montageposition 32 an der Tragstruktur 6 montiert ist. Hierbei erfolgt der Einschub der Verstelleinheit 4 in die Tragstruktur 6 in Vergleich zur ersten Montageposition 30 aus der Gegenrichtung, d. h. aus Richtung des Pfeils 56. Hierbei fluchtet die zweite Schrauböse 52 mit dem zweiten Schraubzapfen 36. Durch eine nicht dargestellte Schraube können die zweite Schrauböse 52 und der zweite Schraubzapfen 36 miteinander verschraubt werden.

Um die erste Montageposition 30 festzulegen, sind die in Einschubrichtung 54 hinteren Klemmklauen 16 des ersten Satzes 22 von Klemmklauen 16 mit einem ersten Endanschlag 58 versehen, der den Einschub der freien Enden 42 in die Klemmkanäle 16 stoppt. Damit ist die erste Montageposition 30 in drei Dimensionen festgelegt. Um die zweite Montageposition 32 festzulegen, sind die vier Klemmklauen 16 des zweiten Satzes 24 von Klemmklauen jeweils mit einem zweiten Endanschlag 60 versehen, der den Einschub der freien Enden 42 in die Klemmkanäle 16 stoppt. Damit ist die zweite Montageposition 32 in drei Dimensionen festgelegt.

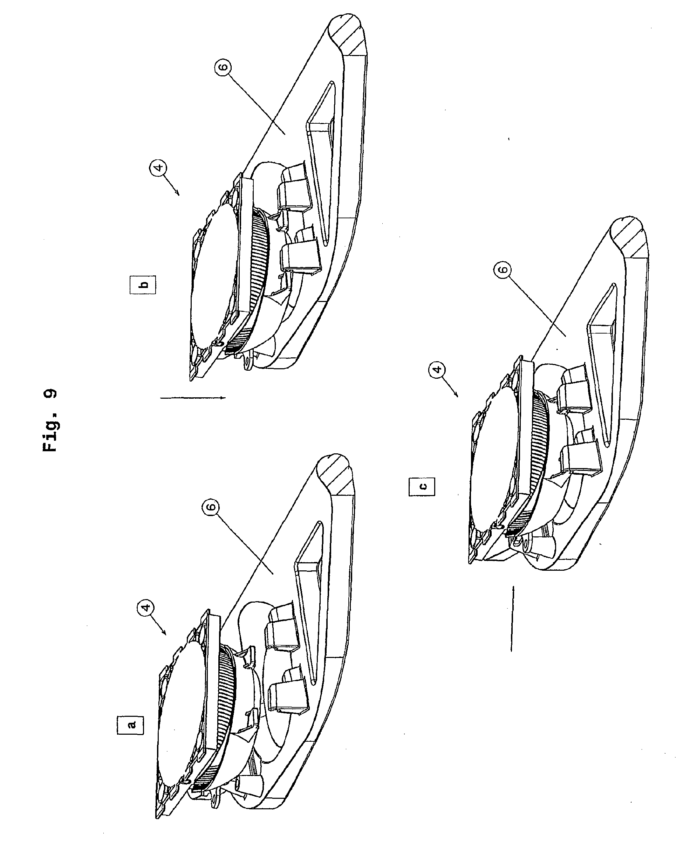

Die Fig. 9a, 9b und 9c zeigen verschiedene Phasen des Einschiebens der Verstelleinheit 4 in die erste Montageposition 30 an der Tragstruktur 6. In Fig. 9a wird die Verstelleinheit 4 im Bereich der ersten Montageposition 30 positioniert. In Fig. 9b werden die freien Enden 42 der Klemmlaschen 40 in der Ebene der Klemmkanäle 16, d.h. der ersten Klemmebene 26 positioniert. In Fig. 9c werden die freien Enden 42 der Klemmlaschen 40 in die zugehörigen Klemmkanäle 16 bis zu dem ersten Endanschlag 58 eingeschoben. Damit ist die die Verstelleinheit 4 in der ersten Montageposition 30 durch Form- und Reibschluss fixiert. Zusätzlich wird die Verstelleinheit 4 noch durch Verschraubung der ersten Schrauböse 50 mit dem ersten Schraubzapfen 34 gesichert.

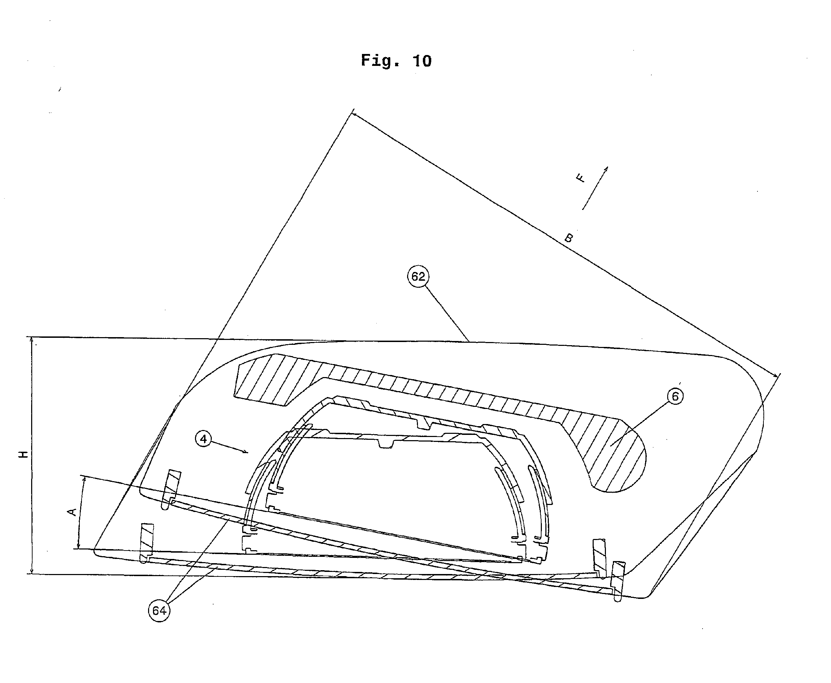

Fig. 10 zeigt eine Schnittdarstellung einer schematischen Darstellung einer Spiegelanordnung mit einem Gehäuse 62, der Tragstruktur 6, der Verstelleinheit 4 und einer Spiegelscheibe 64, wobei einmal die Verstelleinheit 4 in der ersten Montageposition 30 und einmal in der zweiten Montageposition 32 montiert ist. Der Winkelversatz A der sich zwischen den beiden Montagepositionen 30, 32 ergibt liegt im Bereich zwischen 5° und 20°. Die Spiegelhöhe H gemessen entlang der Spiegelscheibe 64 liegt im Bereich zwischen 70 mm und 130 mm und die Spiegelbreite B gemessen horizontal und senkrecht zur Fahrtrichtung F im Bereich zwischen 180 mm und 250 mm.

### Bezugszeichenliste:

- 2: Spiegelkomponente
- 4: Verstelleinheit
- 6: Tragstruktur
- 8, 9: Durchbrüche in 6
- 10: Vorderseite
- 11: Rückseite
- 12: Vertiefung
- 14: Klemmklauen
- 15: obere Randfläche von 16
- 16: Klemmkanal
- 17: untere Randfläche von 16
- 18: großer Fuß von 14
- 20: kleiner Fuß von 14
- 22: erster Satz
- 24: zweiter Satz
- 26: erste Klemmebene
- 28: zweite Klemmebene
- 30: erste Montageposition
- 32: zweite Montageposition
- 34: erster Schraubzapfen, erstes Sicherungselement für 10
- 36: zweiter Schraubzapfen, erstes Sicherungselement für 12
- 38: Tragplatte
- 40: Klemmlaschen
- 42: freies Ende von 40
- 44: erste Führungskante
- 46: zweite Führungskante
- 48: Führungsfläche
- 50: erste Schrauböse, zweites Sicherungselement für 10
- 52: zweite Schrauböse, zweites Sicherungselement für 12
- 54: Einschubrichtung für 30
- 56: Einschubrichtung für 32
- 58: erster Endanschlag
- 60: zweiter Endanschlag
- 62: Gehäuse
- 64: Spiegelscheibe
- A: Winkelversatz
- B: Spiegelbreite
- H: Spiegelhöhe
- F: Fahrtrichtung

## Patentansprüche

1. Spiegelkomponente für eine Kraftfahrzeug-Spiegelanordnung mit einer Tragstruktur (6) und einer an der Tragstruktur (6) befestigten Verstelleinheit (4), **dadurch gekennzeichnet, dass** die Verstelleinheit (4) an der Tragstruktur (6) mittels einer Klemmverbindung (14,40) befestigt ist, wobei wenigstens ein erster (22) und ein zweiter Satz (24) von Klemmklauen (14) oder Klemmlaschen (40) vorgesehen ist, die wenigstens zwei unterschiedliche Montagepositionen (30, 32) der Verstelleinheit (4) an der Tragstruktur (6) festlegen.

2. Spiegelkomponente nach Anspruch 1, **dadurch gekennzeichnet, dass** die Klemmverbindung wenigstens zwei einander gegenüberliegende Klemmlaschen (40) aufweist, die sich von gegenüberliegenden Seiten der Spiegelkomponenten erstrecken und die in komplementär ausgebildete Klemmklauen (14) form- und reibschlüssig eingreifen.

3. Spiegelkomponente nach Anspruch 2, **dadurch gekennzeichnet, dass** wenigstens zwei Paare von Klemmlaschen (40) und komplementären Klemmklauen (14) vorgesehen sind, und das die komplementären Elemente der Paare jeweils einander gegenüberliegend angeordnet sind.

4. Spiegelkomponente nach einem der vorhergehenden Ansprüche, **dadurch gekennzeichnet, dass** die Klemmlaschen (40) ein freies Ende (42) umfassen, dass die Klemmklauen (14) im Querschnitt U-förmige Klemmkanäle (16) umfassen, und dass die freien Enden (42) der Klemmlaschen (40) in die U-förmigen Klemmkanäle (16) einbringbar sind.

5. Spiegelkomponente nach einem der vorhergehenden Ansprüche, **dadurch gekennzeichnet, dass** sich die beiden Montagepositionen (30, 32) um einen Winkel (A) im Bereich zwischen 5° und 20° unterscheiden.

6. Spiegelkomponente nach einem der vorhergehenden Ansprüche, **dadurch gekennzeichnet, dass** die Klemmklauen (14) oder die Klemmlaschen (40) jeweils einen Fuß (18, 20) aufweisen, der sich von der Tragstruktur (6) wegerstreckt.

7. Spiegelkomponente nach einem der vorhergehenden Ansprüche 3 bis 6, **dadurch gekennzeichnet, dass** Tragstruktur (6) im Bereich unter der Verstelleinheit (4) ein Vertiefung (12) aufweist, dass einander gegenüberliegende Klemmlaschen (40) oder Klemmklauen (14) auf unterschiedlichen Seiten der Vertiefung (12) angeordnet sind.

8. Spiegelkomponente nach einem der vorhergehenden Ansprüche, **dadurch gekennzeichnet, dass** die Klemmlaschen (40) durch Drehung und/oder durch eine lineare Schubbewegung in die Klemmklauen (14) einbringbar sind.

9. Spiegelkomponente nach einem der vorhergehenden Ansprüche, **dadurch gekennzeichnet, dass** die Klemmlaschen (40) bzw. die Klemmklauen (14) eine Klemmebene (26, 28) aufspannen.

10. Spiegelkomponente nach Anspruch 9, **dadurch gekennzeichnet, dass** die Klemmebene (26, 28) eine Schnittebene durch die Verstelleinheit (4) ist.

11. Spiegelkomponente nach einem der vorhergehenden Ansprüche, **dadurch gekennzeichnet, dass** die Klemmlaschen (409 erste Führungsflächen (48) aufweisen, dass die Klemmklauen (14) zweite Führungsflächen (17) aufweisen, und dass die ersten und zweiten Führungsflächen (48, 17) einander kontaktieren.

12. Spiegelkomponente nach einem der vorhergehenden Ansprüche, **gekennzeichnet durch** eine Sicherungseinrichtung (34, 50, 36, 52) zum Fixieren der Klemmverbindung in der jeweiligen Montageposition (30, 32).

13. Spiegelkomponente nach Anspruch 12, **dadurch gekennzeichnet, dass** die Sicherungseinrichtung (34, 50, 36, 52) ein erstes (34, 36) und eine zweites (50, 52) Sicherungselement umfasst und dass das erste Sicherungselement (34, 36) mit der Tragstruktur (6) und das zweite Sicherungselement (50, 52 mit der Vertelleinheit (4) verbunden ist.

14. Spiegelkomponente nach Anspruch 13, **dadurch gekennzeichnet, dass** die Sicherungseinrichtung (34, 50, 36, 52) eine drittes Sicherungselement umfasst, mittels dem das erste und zweite Sicherungselement lösbar miteinander verbindbar sind.

15. Spiegelanordnung mit einer Spiegelkomponente nach einem der vorhergehenden Ansprüche, einem Gehäuse (62) und wenigstens einer Spiegelscheibe (64), die an der Verstelleinheit (4) montiert ist.

16. Spiegelanordnung nach Anspruch 15, **dadurch gekennzeichnet, dass** die Spiegelhöhe (H) gemessen entlang der Spiegelscheibe (64) im Bereich zwischen 70 mm und 130 mm und die Spiegelbreite (B) gemessen senkrecht zur Fahrtrichtung (F) im Bereich zwischen 180 mm und 250 mm liegt.

17. Tragstruktur (6) einer Spiegelkomponente oder Spiegelanordnung nach einem der vorhergehenden Ansprüche, mit wenigstens einem Paar von einander gegenüberliegenden Klemmklauen (14) oder Klemmlaschen (40).

18. Verstelleinheit (4) einer Spiegelkomponente oder Spiegelanordnung nach einem der vorhergehenden Ansprüche, mit wenigstens einem Paar von einander gegenüberliegenden Klemmlaschen (40) oder Klemmklauen (14).

## Claims

1. A mirror component for an automotive mirror arrangement, comprising a support structure (6) and an adjusting unit (4) fastened to the support structure (6), **characterized in that** the adjusting unit (4) is fastened to the support structure (6) by means of a clamping connection (14, 40), wherein at least one first (22) and one second set (24) of clamping claws (14) or clamping tabs (40) are provided which define at least two different mounting positions (30, 32) of the adjusting unit (4) on the support structure (6).

2. The mirror component according to claim 1, **characterized in that** the clamping connection comprises at least two clamping tabs (40) which extend from opposite sides of the mirror component, said clamping tabs (40) engage in complementarily formed clamping claws (14) in form-fit and frictional engagement.

3. The mirror component according to claim 2, **characterized in that** at least two pairs of clamping tabs (40) and complementary clamping claws (14) are provided, and **in that** the complementary elements of the pairs are each arranged to face each other.

4. The mirror component according to any one of the preceding claims, **characterized in that** the clamping tabs (40) have a free end (42), **in that** the clamping claws (14) include clamping channels (16) which are U-shaped in a sectional view, and **in that** the free ends (42) of the clamping tabs (40) are adapted to be inserted into the U-shaped clamping channels (16).

5. The mirror component according to any one of the preceding claims, **characterized in that** the two mounting positions (30, 32) differ by an angle (A) in a range from 5° to 20°.

6. The mirror component according to any one of the preceding claims, **characterized in that** the clamping claws (14) or the clamping tabs (40) each have a base (18, 20) extending away from the support structure (6).

7. The mirror component according to any one of the preceding claims 3 to 6, **characterized in that** the support structure (6) has a depression (12) in the area under the adjusting unit (4), and **in that** mutually facing clamping tabs (40) or clamping claws (14) are arranged on different sides of the depression (12).

8. The mirror component according to any one of the preceding claims, **characterized in that** the clamping tabs (40) are adapted to be inserted into the clamping claws (14) by rotation and/or by a linear translational movement.

9. The mirror component according to any one of the preceding claims, **characterized in that** the clamping tabs (40) or the clamping claws (14), respectively, define a clamping plane (26, 28).

10. The mirror component according to claim 9, **characterized in that** the clamping plane (26, 28) is a sectional plane through the adjusting unit (4).

11. The mirror component according to any one of the preceding claims, **characterized in that** the clamping tabs (40) have first guide surfaces (48), **in that** the clamping claws (14) have second guide surfaces (17), and **in that** the first and second guide surfaces (48, 17) contact each other.

12. The mirror component according to any one of the preceding claims, **characterized by** a securing means (34, 50, 36, 52) for immobilizing the clamping connection in the respective mounting position (30, 32).

13. The mirror component according to claim 12, **characterized in that** the securing means (34, 50, 36, 52) comprises a first (34, 36) and a second (50, 52) securing member, and **in that** the first securing member (34, 36) is connected to the support structure (6) and the second securing member (50, 52) to the adjusting unit (4).

14. The mirror component according to claim 13, **characterized in that** the securing means (34, 50, 36, 52) comprises a third securing member whereby the first and second securing members may be connected to each other in a releasable manner.

15. A mirror arrangement comprising a mirror component according to any one of the preceding claims, a housing (62), and at least one mirror pane (64) which is mounted on the adjusting unit (4).

16. The mirror arrangement according to claim 15, **characterized in that** the mirror height (H) as measured along the mirror pane (64) is in a range from 70 mm to 130 mm, and the mirror width (B) as measured perpendicularly to the direction of travel (F) is in a range from 180 mm to 250 mm.

17. A support structure (6) of a mirror component or mirror arrangement according to any one of the preceding claims, comprising at least one pair of mutually facing clamping claws (14) or clamping tabs (40).

18. An adjusting unit (4) of a mirror component or mirror arrangement according to any one of the preceding claims, comprising at least one pair of mutually facing clamping tabs (40) or clamping claws (14).

## Revendications

1. Élément de rétroviseur pour un système de rétroviseur de véhicule automobile, comportant une structure de support (6) et une unité de réglage (4) fixée sur la structure de support (6), **caractérisé en ce que** l'unité de réglage (4) est fixée sur la structure de support (6) au moyen d'un assemblage par serrage (14, 40), au moins un premier (22) et un deuxième (24) ensemble de mâchoires de serrage (14) ou pattes de serrage (40) étant prévus, lesquels définissent deux positions de montage (30, 32) différentes de l'unité de réglage (4) sur la structure de support (6).

2. Élément de rétroviseur selon la revendication 1, **caractérisé en ce que** l'assemblage par serrage comporte au moins deux pattes de serrage (40), qui sont disposées l'une en face de l'autre, s'étendent à partir de côtés opposés de l'élément de rétroviseur et s'engagent par conjugaison de forme et par frottement dans des mâchoires de serrage (14) réalisées de manière complémentaire.

3. Élément de rétroviseur selon la revendication 2, **caractérisé en ce qu'**il est prévu au moins deux paires de pattes de serrage (40) et de mâchoires de serrage (14) complémentaires, et **en ce que** les éléments complémentaires des paires sont disposés respectivement face à face.

4. Élément de rétroviseur selon l'une quelconque des revendications précédentes, **caractérisé en ce que** les pattes de serrage (40) comportent une extrémité libre (42), **en ce que** les mâchoires de serrage (14) comportent des canaux de serrage (16) avec une section transversale en forme de U, et **en ce que** les extrémités libres (42) des pattes de serrage (40) sont aptes à être introduites dans les canaux de serrage (16) en forme de U.

5. Élément de rétroviseur selon l'une quelconque des revendications précédentes, **caractérisé en ce que** les deux positions de montage (30, 32) se différencient par un angle (A) dans une plage entre 5° et 20°.

6. Élément de rétroviseur selon l'une quelconque des revendications précédentes, **caractérisé en ce que** les mâchoires de serrage (14) ou les pattes de serrage (40) comportent chacune un pied (18, 20) qui s'étend en s'écartant de la structure de support (6).

7. Élément de rétroviseur selon l'une quelconque des revendications précédentes 3 à 6, **caractérisé en ce que** la structure de support (6), dans la zone en dessous de l'unité de réglage (4), comporte un creux (12), **en ce que** des pattes de serrage (40) ou mâchoires de serrage (14) face à face sont disposées sur des côtés différents du creux (12).

8. Élément de rétroviseur selon l'une quelconque des revendications précédentes, **caractérisé en ce que** les pattes de serrage (40) peuvent être introduites dans les mâchoires de serrage (14) sous l'effet d'une rotation et/ou d'un mouvement de poussée linéaire.

9. Élément de rétroviseur selon l'une quelconque des revendications précédentes, **caractérisé en ce que** les pattes de serrage (40) et les mâchoires de serrage (14) déploient respectivement un plan de serrage (26, 28).

10. Élément de rétroviseur selon la revendication 9, **caractérisé en ce que** le plan de serrage (26, 28) est un plan de coupe à travers l'unité de réglage (4).

11. Élément de rétroviseur selon l'une quelconque des revendications précédentes, **caractérisé en ce que** les pattes de serrage (40) comportent des premières surfaces de guidage (48), **en ce que** les mâchoires de serrage (14) comportent des deuxièmes surfaces de guidage (17), et **en ce que** les premières et deuxièmes surfaces de guidage (48, 17) entrent en contact les unes avec les autres.

12. Élément de rétroviseur selon l'une quelconque des revendications précédentes, **caractérisé par** un dispositif de sécurité (34, 50, 36, 52) pour immobiliser l'assemblage par serrage dans la position de montage (30, 32) respective.

13. Élément de rétroviseur selon la revendication 12, **caractérisé en ce que** le dispositif de sécurité (34, 50, 36, 52) comporte un premier (34, 36) et un deuxième (50, 52) élément de sécurité et **en ce que** le premier élément de sécurité (34, 36) est relié à la structure de support (6) et le deuxième élément de sécurité (50, 52) est relié à l'unité de réglage (4) .

14. Élément de rétroviseur selon la revendication 13, **caractérisé en ce que** le dispositif de sécurité (34, 50, 36, 52) comporte un troisième élément de sécurité, au moyen duquel le premier et le deuxième élément de sécurité peuvent être reliés l'un à l'autre de manière amovible.

15. Système de rétroviseur comportant un élément de rétroviseur selon l'une des revendications précédentes, un boîtier (62) et au moins un miroir (64) qui est monté sur l'unité de réglage (4).

16. Système de rétroviseur selon la revendication 15, **caractérisé en ce que** la hauteur (H) du rétroviseur, mesurée le long du miroir (64), se situe dans une plage entre 70 mm et 130 mm, et la largeur (B) du rétroviseur, mesurée perpendiculairement à la direction de déplacement (F) du véhicule, se situe dans une plage entre 180 mm et 250 mm.

17. Structure de support (6) d'un élément de rétroviseur ou système de rétroviseur selon l'une des revendications précédentes, comportant au moins une paire de mâchoires de serrage (14) ou pattes de serrage (40) situées face à face.

18. Unité de réglage (4) d'un élément de rétroviseur ou système de rétroviseur selon l'une des revendications précédentes, comportant au moins une paire de pattes de serrage (40) ou mâchoires de serrage (14) situées face à face.
